# EUROPÄISCHE PATENTSCHRIFT

(11) **EP 1 395 356 B1**
(45) Veröffentlichungstag und Bekanntmachung des Hinweises auf die Patenterteilung: **16.08.2006**
(21) Anmeldenummer: 02740630.5
(22) Anmeldetag: 22.05.2002
(51) Int. Cl.: B01F 15/04, B29B 7/88, B29C 47/10

(54) **VERFAHREN ZUR KONTINUIERLICHEN HERSTELLUNG VON MISCHUNGEN MIT HOHER DIVERSITÄT**
METHOD FOR THE CONTINUOUS PRODUCTION OF HIGHLY DIVERSE MIXTURES
PROCEDE CONTINU DE PRODUCTION DE MELANGES PRESENTANT UNE DIVERSITE ELEVEE

(30) Priorität: 25.05.2001 DE 10125571
(43) Veröffentlichungstag der Anmeldung: 10.03.2004
(73) Patentinhaber: Ticona GmbH, 65451 Kelsterbach (DE)
(72) Erfinder: FLEISCHER, Dietrich, 64287 Darmstadt (DE); REISINGER, Thomas, 55218 Ingelheim (DE); SCHNELLER, Arnold, 64409 Messel (DE); WAGENER, Reinhard, 65719 Hofheim (DE); REHAHN, Matthias, 76229 Karlsruhe (DE); BASTIAN, Martin, 97209 Veitshöchheim (DE); PASCH, Harald, 64625 Bensheim (DE); ALIG, Ingo, 64331 Weiterstadt (DE)
(86) Internationale Anmeldenummer: PCT/EP2002/005592
(87) Internationale Veröffentlichungsnummer: WO 2002/096545

(56) Entgegenhaltungen:
- US-A- 4 620 794
- US-A- 5 064 100
- US-A- 5 266 273
- PATENT ABSTRACTS OF JAPAN vol. 011, no. 160 (M-592), 23. Mai 1987 (1987-05-23) -& JP 61 293812 A (TOYOTA MOTOR CORP), 24. Dezember 1986 (1986-12-24)
- NYDEN AND GILMAN: "Continuous flow flame extruder for hight-throughput formulation" NATIONAL INSTITUTE OF STANDARDS AND TECHNOLOGY, [Online] 15. März 2000 (2000-03-15), XP002213863 Gaithersburg USA Gefunden im Internet: <URL:http://fire.nist.gov/bfrlpubs/fire00/ PDF/f00017.pdf> [gefunden am 2002-09-18] in der Anmeldung erwähnt

## Beschreibung

Der Einsatz von hochautomatisierten, kombinatorischen Methoden zur Prüfung von Substanzen auf ihre Wirksamkeit ist fester Bestandteil der Pharma- und Pflanzenschutzforschung. Dabei bezieht sich der Begriff Kombinatorik im allgemeinen auf die Herstellung einer Vielzahl von chemisch unterschiedlichen Verbindungen oder Mischungen und die anschließende schnelle Prüfung dieser Substanzbibliotheken auf eine oder mehrere Eigenschaften. Da sich mit diesen Methoden neben weiteren Vorteilen vor allem eine starke Beschleunigung des Probendurchsatzes erzielen läßt, wird dafür synonym auch der Begriff Hochdurchsatz-Screening verwendet.

Mit diesen Methoden lassen sich beispielsweise in der Wirkstoffforschung pro Tag mehrere 10.000 Substanzen auf ihre Wirksamkeit überprüfen. Der Einsatz von kombinatorischen Methoden wird beispielsweise beschrieben von
- Lowe, JCS Reviews, 309-317 (1995),
- N.K. Terrett, Combinatorial Chemistry, Oxford University Press, Oxford, 1998,
- Combinatorial Chemistry and Molecular Diversity in Drug Discovery (Hrsg.: E.M. Gordon, J.F. Kerwin), Wiley, New York 1998.

In der letzten Zeit finden diese Methoden der kombinatorischen Chemie und des Hochdurchsatz-Screenings zunehmend Aufmerksamkeit in der Materialwissenschaft, beispielsweise bei optischen Funktionsmaterialien oder der Katalyse. Ein Überblick über diese neueren Entwicklungen findet sich beispielhaft in dem Artikel von B. Jandeleit, D.J. Schäfer, T.S. Powers, H.W. Turner, W.H. Weinberg in Angewandte Chemie 1999, 111, 2648-2689..

Der Einsatz von kombinatorischen Methoden erweist sich nach den bisherigen Erkenntnissen und Erfahrungen immer dann als sinnvoll, wenn komplexe Systeme analysiert und/oder synthetisiert werden sollen, für die eine oder mehrere der folgenden Eigenschaften zutreffen:
1.) Es existieren wenig oder keine Erkenntnisse über Struktur-Eigenschaftsbeziehungen oder Wirkungsmechanismen.
2.) Ergebnisse lassen sich bisher an diesen Systemen meist nur in sehr aufwendigen und zeitraubenden Versuchen zur Herstellung und Ausprüfung gewinnen.
3.) Die Systeme bestehen aus einer größeren Anzahl von Stoffkomponenten und Prozeßparametern mit unterschiedlicher, aber nicht im einzelnen bekannter Funktion und Wechselwirkungen der Komponenten und Parameter untereinander.

Bisher haben auf dem Gebiet der Formulierungen, und hier insbesondere der Polymerformulierungen, kombinatorische Methoden kaum Eingang in Forschung und Entwicklung gefunden.
Die bisher beschriebenen Ansätze zur Herstellung und Ausprüfung von Substanzbibliotheken, auch für Polymere oder Polymerformulierungen, beruhen auf diskreten, räumlich getrennten Behältnissen (Kompartimenten), in denen die Mischungen hergestellt und anschließend geprüft werden.

In US 5,985,356 wird die Copolymerisation von Styrol mit Acrylnitril in Toluol in einer Anordnung bestehend aus 16 Kompartimenten mit einer Größe von 3x3x5 mm beschrieben. Dies bedingt aufwendige Vorrichtungen zur exakten Dosierung von Monomeren und Initiator.

WO 99152962 beschreibt eine Methode zur Herstellung von alternierenden Copolymeren, indem man systematisch in einer Anordnung von 8 mal 14 Reaktionskolben jeweils systematisch die Diol- und die Dicarbonsäure-Komponente variiert.

WO 00/40331 beschreibt eine Apparatur zur Polymerisation von Monomeren in parallel angeordneten Reaktoren.

In einem den nächstkommenden Stand der Technik bildenden Diskussionspapier des National Instituts of Standards and Technology (M.R. Nyden, J.W. Gilman, Proceedings, Fire Retardant Chemicals Association, March 12-15, 2000, Washington, DC, 1-5 pp, 2000) findet sich ein Hinweis auf die kontinuierliche Herstellung von Polymerformulierungen.

In dieser Publikation wird ein Verfahren zur kontinuierlichen Herstellung und Ausprüfung von Polymerformulierungen mit Flammschutzmitteln diskutiert, wozu eine Anlage bestehend aus einer rechnergesteuerten, gravimetrischen Feststoffzufuhr und einem nicht näher spezifizierten Extruder vorgeschlagen wird. Die Anordnung soll Polymere mit Flammschutzadditiven in vorab programmierten Konzentrationen extrudieren, die anschließend on-line analysiert und hinsichtlich Brandverhalten geprüft werden.
Die Konzentrationsvariation des Flammschutzadditivs soll deterministisch über die rechnergesteuerte, gravimetrische Dosiereinheit in vorab festgelegten Konzentrationsschritten erfolgen. Es ist bekannt, daß die Änderung eines Prozeßparameters, beispielsweise einer Dosierungsmenge oder -geschwindigkeit, zunächst zu instationärem Verhalten des Mischers führt, bevor eine konstante und wohl definierte Zusammensetzung des Produkts am Mischerausgang wieder erhalten wird. Die Dauer der instationären Phase, in der kein Produkt mit vorab programmierter Zusammensetzung erhalten wird, kann die Länge der Verweilzeit erreichen oder sogar überschreiten. Die im allgemeinen breite Verteilung der Verweilzeit in einem Schmelzeextruder stellt damit eine deutliche Limitierung dieses Ansatzes für Hochdurchsatz-Screening dar. Die Übertragung der kontinuierlichen Herstellung von Polymerformulierungen mit kombinatorischen Methoden und Hoch-Durchsatz-Screening wird in dieser Veröffentlichung nicht offenbart oder vorgeschlagen.
Polymere, die sich über die Schmelze verarbeiten lassen, werden üblicherweise in einer kontinuierlichen Fahrweise über einen Schmelze-Extrusionsschritt mit zusätzlichen Komponenten gemischt und entweder direkt oder diskontinuierlich zu geformten Gebilden weiterverarbeitet.
Die Übertragung dieser kontinuierlichen Herstellung der Polymer-formulierungen auf kombinatorische Methoden und Hoch-Durchsatz-Screening wurde bisher nicht gezeigt.

Aufgabe der vorliegenden Erfindung ist es, durch einfache Maßnahmen die Nachteile des Standes der Technik zu beheben. Eine weitere Aufgabe der vorliegenden Erfindung besteht darin, zum ersten Mal ein Verfahren zum Hochdurchsatz -Screening für Polymerformulierungen bereitzustellen.

Diese Aufgabe wird gelöst durch ein Verfahren zur kontinuierlichen Herstellung von Mischungen aus mindestens einem thermoplastischen Polymeren und mindestens einem Zuschlagstoff gemäß Anspruch 1.

Durch das erfindungsgemäße Verfahren können auch zwei oder mehrere Zuschlagstoffe gleichzeitig in variierender Konzentration in das Screening-Experiment dosiert werden ; durch simultane Variation der Konzentration der Zuschlagstoffe kann eine Substanzbibliothek generiert werden. Die nach dem erfindungsgemäßen Verfahren hergestellten Mischungen können ein - gegebenenfalls höherdimensionales- Teilvolumen des Phasendiagramms einer Mehrkomponentenmischung umfassen; sie sind daher für ein breit angelegtes Hochdurchsatz-Screening geeignet; Konzentrationsbereiche von kleiner 1 % können hierbei umfaßt werden.

Es wurde ferner überraschenderweise gefunden, daß sich Mischungen bestehend aus einem oder mehreren thermoplastischen Polymeren und einem oder mehreren Zuschlagstoffen mit einem sehr hohen Mass an Diversität in den Konzentrationen der eingesetzten Komponenten sehr schnell und einfach auf kontinuierliche Weise herstellen lassen, indem man gemäß dem erfindungsgemäßen Verfahren das an sich nachteilige Verweilzeitverhalten des Mischaggregats ausnutzt. Dabei werden die Mischungen, die in dem Mischaggregat kontinuierlich hergestellt werden, kontinuierlich in eine der weiteren Verarbeitung und Prüfung zugänglichen Form gebracht. Die Zuschlagstoffekönnen dem Mischaggregat derart zugeführt werden, daß durch das Verweilzeitverhalten des Mischaggregates in der ausgetragenen Polymermischung ein zunächst ansteigender (im folgenden auch als "Heading" bezeichnet) und anschließend abklingender (im Folgenden auch als "Tailing" bezeichnet) Konzentrationsgradient eines oder mehrerer Zuschlagstoffe erzeugt wird.

Die erfindungsgemäßen Verfahren und seine diversen Ausgestaltungen erlauben es unter Verzicht auf die vorher programmierte Ansteuerung und Einstellung fester Punkte im Phasendiagramm einer Mehrkomponentenmischung eine Substanzbibliothek zu erzeugen, die dennoch ein vorher bestimmtes Teilvolumen des mehrdimensionalen Phasendiagramms umfaßt. Bei der Durchführung des erfindungsgemäßen Verfahrens treten keine unproduktiven Wartezeiten durch die Übergangszeit zwischen stationären Betriebszuständen der Versuchsanordnung auf. Somit bietet dieses Verfahren erstmalig die Basis für ein wirtschaftlich effektives Hochdurchsatz-Screening. Durch Ausnutzen des Abklingverhaltens des Mischaggregats nach der Zugabe eines Zuschlagsstoffes, beispielsweise durch einen Konzentrationspuls, können insbesondere sehr kleine Konzentrationen einer oder mehrerer Komponenten eingestellt und untersucht werden. Das erfindungsgemäße Verfahren erlaubt im Gegensatz zur absatzweisen Präparation von Substanzbibliotheken in Kompartimenten die Herstellung von Mischungen mit Prozeßparametern sehr nahe an den technischen Herstellprozessen.

Ein weiterer Vorteil von nach dem vorliegenden Verfahren hergestellten Mischungen liegt darin, daß sich das kontinuierlich hergestellte Produkt leicht in beliebig große diskrete Fraktionen unterteilen läßt, während durch die Verfahren nach dem Stand der Technik durch das Verfahren selbst lediglich diskrete Fraktionen erhältlich sind, deren Eigenschaften vor der Versuchsdurchführung einzeln geplant werden müssen und die nicht in einen kontinuierlichen Produktstrom überführbar sind, auch wenn dies für bestimmte Untersuchungsverfahren vorteilhaft wäre.

Es ist dem Fachmann bekannt, daß die beschriebenen Effekte wie Tailing oder Heading oder Mischen durch die Variation eines oder mehrerer Prozeßparameter des Mischaggregates, die ihrerseits die Material- bzw. Produkteigenschaften durch die Veränderung der mechanischen und thermischen Beanspruchungsgeschichte erheblich verändern können, beeinflußt werden können. Dies kann in vorteilhafter Weise ausgenutzt werden, um die beschriebenen Effekte zu verstärken oder abzuschwächen. Prozeßparameter in diesem Zusammenhang können z.B. Drehzahl des Mischaggregats, Gehäuse- und Schneckengeometrie, Dosierungsort(e), Entgasungsort(e), Gehäusetemperatur, etc. sein und kontinuierlich bzw. in einzelnen oder einer Folge von kleinen Stufen variiert werden um Extrudate zu erzeugen, auf deren Basis eine Prozessoptimierung erfolgen kann.

In einer bevorzugten Ausführungsform des erfindungsgemäßen Verfahrens besteht das Mischaggregat aus mindestens einer Schneckenmaschine. In einer bevorzugten Ausführungsform werden als Schneckenmaschinen Extruder, besonders bevorzugt Zweischneckenextruder verwendet.

In einer bevorzugten Ausführungsform wird neben dem Gradienten in Förderrichtung (im Folgenden "Längs-Gradient") auch ein zur Förderrichtung quer (im Folgenden "Quer-Gradient") verlaufender Gradient durch geeignete Düsenausiegung erreicht, so daß die Variation der erreichten Mischungen in Längs- und in Querrichtung erfolgt. Es ist bekannt, daß die Wahl der Düsengeometrie in Bezug auf den Druckabfall entlang der Stromlinien entscheidenden Einfluß auf die Vermeidung des Quer-Gradienten hat. Erfindungsgemäß kann dieser Quer-Gradient, gezielt eingesetzt werden um die Diversität der Mischungen zu vervielfachen. Durch gezielte Wahl der Düsengeometrie kann dieser Quergradient erzeugt werden.

Die nach dem erfindungsgemäßen Verfahren hergestellten Mischungen mit hoher Diversitätkönnen als Substanzbibliothek für das Hoch-Durchsatz-Screening und kombinatorische Methoden verwendet werden.

Aus den Mischungen nach dem erfindungsgemäßen Verfahren können Formkörper hergestellt werden, insbesondere Folienbänder, Extrudatstränge und aus diesen Extrudatsträngen hergestellte Granulate.

Insbesondere für die Herstellung von Mischungen von Mehrkomponentenmischungen, also von Mischungen mit Polymer und mehreren Zuschlagstoffen, die in jeweils voneinander unabhängigen Konzentrationsgradienten in der fertigen Mischung vorliegen sollen, ist eine Kalibrierung des Mischaggregates vorteilhaft, so daß das genaue Verweilzeitverhalten der Zuschlagstoffe bekannt ist. Auf diese Weise kann die Zugabe der verschiedenen Zuschlagstoffe gegebenenfalls räumlich und/oder zeitlich voneinander getrennt vorgenommen werden, so daß die erfindungsgemäßen Mischungen die gewünschten Konzentrationsgradienten aufweisen.

Die erfindungsgemäßen Mischungen werden kontinuierlich hergestellt und besitzen mindestens einen Konzentrationsgradienten der verwendeten Zuschlagstoffe. Kontinuierlich im Sinne der vorliegenden Erfindung bedeutet, daß das Verfahren kontinuierlich abläuft und das Endprodukt in einem kontinuierlichen Produktstrom aus dem Mischaggregat ausgetragen wird und insbesondere nicht in Form von diskreten Fraktionen vorliegt. Bevorzugt liegt die Mischung zum Beispiel in Form eines Extrudatstranges oder eines freitragenden Folienbandes vor, so daß diese beispielsweise durch Zerschneiden oder Stanzen des Folienbandes oder Granulierung des Extrudatstranges leicht in diskrete Fraktionen überführt werden kann, wenn dies für die nachfolgende Verarbeitung oder Untersuchung vorteilhaft ist. Die nach dem erfindungsgemäßen Verfahren hergestellten Mischungen zeichnen sich dadurch aus, daß sie einen Konzentrationsgradienten mindestens eines Zuschlagstoffes in Längsrichtung des vom kontinuierlichen Mischaggregats erzeugten Extrudatstranges aufweisen.
Dies bedeutet, daß die Konzentration des Zuschlagstoffes sich in der Mischung verändert. Das Konzentrationsprofil entlang des Extrudatstranges ist abhängig vom Verweilzeitverhalten des Mischaggregates und vom räumlichen Abstand zwischen der Dosierstelle des jeweiligen Zuschlagstoffes und der Extrusionsdüse. In einer vorteilhaften Ausführung der vorliegenden Erfindung wird mindestens ein Zuschlagstoff zugegeben, vorteilhaft in Form eines Konzentrationspulses und/oder einer Konzentrationspulsfolge und/oder einer Konzentrationsrampe, so daß sich die Konzentration mindestens eines Zuschlagstoffes in der erhaltenen Mischung nach einem solchen Konzentrationspuls als Funktion der Zeit und der Menge der ausgetragenen Mischung ändert. Vorteilhaft erreicht man für einen Dosierungspuls ein relativ steiles Heading- und ein flach auslaufendes Tailingverhalten.
Die erfindungsgemäß hergestellten Mischungen sind vorteilhaft Polymerformulierungen. Als Polymerformulierungen werden Mischungen eines Polymeren mit einem oder mehreren anderen Polymeren und/oder organischen und/oder anorganischen Zuschlagstoffen verstanden. Die Zuschlagstoffe können flüssig oder fest vorliegen und in den Verarbeitungseigenschaften weit variieren. Unter Verarbeitungseigenschaften werden beispielsweise die Viskosität, Dichte oder im Falle von Flüssigkeiten die Oberflächenspannung oder im Falle von festen Zuschlagstoffen Korngröße, Kornform, Komgrößenverteilung, Härte, Fließfähigkeit, Adhäsion oder Schüttdichte verstanden. Die Zuschlagstoffe verleihen der Polymerformulierung die in der jeweiligen Anwendung geforderten Eigenschaften. Als Beispiele für die große Zahl der im Stand der Technik bekannten Zuschlagstoffe seien beispielsweise Füllstoffe genannt, die in Kugel-, Faser- oder Plättchenform mit Abmessungen von 10 nm bis zu einigen Millimeter verwendet werden können. Sie werden hauptsächlich zur Einstellung der mechanischen Eigenschaften der Polymerformulierung eingesetzt.
Weitere Zuschlagstoffe sind beispielsweise Lichtstabilisatoren, insbesondere Stabilisatoren gegen UV- und sichtbares Licht, Flammschutzmittel, Verarbeitungshilfsmittel, Pigmente, Gleit- und Reib-Additive, Haftvermittler, Schlagzähmodifikatoren, Fließmittel, Entformungsmittel, Nukleierungsmittel, Säure-und Basefänger, Oxidations-Stabilisatoren. Solche Zusclagstoffe oder Additive für Kunststoffe werden beispielsweise beschrieben von H. Zweifel in: Plastics Additives Handbook, 5^{th} edition, Hanser Verlag 2000, worauf Bezug genommen wird. Als Zuschlagstoffe können außerdem thermoplastische und/oder nicht thermoplastische Polymere verwendet werden, insbesondere thermoplastische Polymere, so daß Blends und Polymerlegierungen mit Konzentrationsgradienten hergestellt werden. Der Begriff thermoplastische Polymere im Sinne der Erfindung schließt grundsätzlich alle bekannten, synthetischen, natürlichen und modifizierten natürlichen Polymere ein, die sich durch Schmelzextrusion verarbeiten lassen. Beispielhaft seien genannt:
Polylactone wie Poly(pivalolacton), Poly(caprolacton) und ähnliche; Polyurethane wie die Polymerisationsprodukte der Diisocyanate wie zum Beispiel 1,5-Naphthalin-diisocyanat; p-Phenylen-diisocyanat, m-Phenylen-diisocyanat, 2,4-Toluyl-diisocyanat, 2,6-Toluylene-diisocyanat, 4,4'-Diphenylmethan-diisocyanat, 3,3'-Dimethyl-4,4'-Biphenyl-diisocyanat, 4,4'-Diphenylisopropyliden-diisocyanat, 3,3'-Dimethyl-4,4'-diphenyl-diisocyanat, 3,3'-Dimethyl-4,4'-diphenylmethan-diisocyanat, 3,3'-Dimethoxy-4,4'-biphenyl-diisocyanat, Dianisidin-diisocyanat, Toluidindiisocyanat, Hexamethylen-diisocyanat, 4,4'-Diisocyanatodiphenylmethan, 1,6-Hexamethylene-diisocyanat, 4,4'-Dicyclohexylmethan-diisocyanat und ähnlichen mit langkettigen Diolen wie Poly(tetramethylen adipat), Poly(ethylen adipat), Poly(1,4-butylen adipat), Poly(ethylen succinat), Poly(2,3-butylen succinat), Polyether diole und/oder einem oder mehreren Diolen wie Ethylenglykol, Propylenglykol und/oder ein Polydiol wie Diethylenglykol, Triethylenglykol und/oder Tetraethylenglykol und ähnliche;
Polycarbonate wie Poly[methan bis(4-phenyl) carbonat], Poly[1,1-ether bis(4-phenyl) carbonat], Poly[diphenylmethan bis(4-phenyl)carbonat], Poly[1,1-cyclohexan bis(4-phenyl) carbonat] und ähnliche;
Polysulfone wie das Reaktionsprodukt des Natriumsalzes des 2,2-Bis(4-hydroxyphenyl) propans oder des 4,4'-Dihydroxydiphenylethers mit 4,4'-Dichlorodiphenylsulfon und ähnliche;
Polyether, Polyketone und Polyetherketone wie Polymerisationsprodukte des Hydrochinons, des 4,4'-Dihydroxybiphenyls, des 4,4'-Dihydroxybenzophenons oder des 4,4'-Dihydroxydiphenylsulfons mit dihalogenierten, insbesondere difluorierten oder dichlorierten aromatischen Verbindungen vom Typ 4,4'-Di-halo-diphenylsulfon, 4,4'-Di-halo-dibenzophenon, Bis-4,4'-di-halobezoyl-benzol, 4,4'-Di-halo-biphenyl und ähnliche;
Polyamide wie Poly(4-amino butanoat), Poly(hexamethylen adipamid), Poly(6-aminohexanoat), Poly(m-xylylen adipamid), Poly(p-xylylen sebacamid), Poly(2,2,2-trimethyl hexamethylen terephthalamid), Poly(metaphenylen isophthalamid) (NOMEX), Poly(p-phenylen terephthalamid) (KEVLAR), und ähnliche;
Polyester wie Poly(ethylen acetat), Poly(ethylen-1,5-naphthalat, Poly(1,4-cyclohexandimethylen terephthalat), Poly(ethylen oxybenzoat) (A-TELL), Poly(parahydroxy benzoat) (EKONOL), Poly(1,4-cyclohexyliden-dimethylen terephthalat) (KODEL) (cis)Poly(1,4-cyclohexyliden-dimethylen terephthalat) (Kodel), Polyethylenterephthalat, Polybutylenterephthalat und ähnliche
Poly(arylenoxide) wie Poly(2,6-dimethyl-1,4-phenylen oxid), Poly(2,6-diphenyl-1,4-phenylen oxid) und ähnliche
Flüssigkristalline Polymere wie die Polykondensationsprodukte aus der Gruppe der Monomeren, die besteht aus Terephthalsäure, Isophthalsäure, 1,4-Naphthalindicarbonsäure, 2,6-Napthalindicarbonsäure, 4,4'-Biphenyldicarbonsäure, 4-Hydroxybenzoesäure, 6-Hydroxy-2-naphthalindicarbonsäure, Hydrochinon, 4,4'-Dihydroxybiphenyl, 4-Aminophenol und ähnliche.
Poly(arylene sulfide) wie Poly(phenylensulfid), Poly(phenylen-sulfid-keton), Poly(phenylen-sulfid-sulfon)und ähnliche;
Polyetherimide;
Vinyl Polymere und ihre Copolymere wie Polyvinyl acetat, Polyvinyl chlorid; Polyvinylbutyral, Polyvinyliden chlorid, Ethylen-vinyl acetat Copolymere und ähnliche;
Polyacrylderivate, Polyacrylat und seine Copolymere wie Polyethylacrylat, Poly(n-butyl acrylat), Polymethylmethacrylat, Polyethylmethacrylat, Poly(n-butyl methacrylat), Poly(n-propyl methacrylat),Polyacrylnitril, wasserunlösliche EthylenAcrylsäure Copolymere, wasserunlösliche Ethylen-Vinyl Alkohol Copolymere, Acrylnitril-Copolymere, Methylmethacrylat-Styrol Copolymere, Ethylen-Ethylacrylat Copolymere, Acryl-Butadien-Styrol Copolymere und ähnliche;
Polyolefine wie Low Density Poly(ethylen), Poly(propylen), chloriertes Low Density Poly(ethylen), Poly(4-methyl-1-penten), Poly(ethylen), Poly(styrol), und ähnliche;
Wasserunlösliche lonomere; Poly(epichlorhydrin);
Furan Polymer wie Poly(furan);
Zelluloseester wie Zelluloseacetat, Zelluloseacetat-butyrat, Zellulosepropionat und ähnliche;
Silicone wie Poly(dimethyl siloxan), Poly(dimethyl siloxan-co-phenylmethyl siloxan), und ähnliche;
Protein Thermoplasten;
sowie alle Mischungen und Legierungen (mischbare und unmischbare Blends) von zwei oder mehreren der genannten Polymere.

Thermoplast ische Polymere im Sinne der Erfindung umfassen auch thermoplastische Elastomere, die sich beispielsweise von einem oder mehreren der folgenden Polymere ableiten:
Bromierter Butyl Kautschuk, Chlorierter Butyl Kautschuk, Polyurethan-Elastomere, Fluorelastomere, Polyester-elastomere, Polyvinylchlorid, Butadiene/Acrylnitril-Elastomere, Silicon-Elastomere, Poly(butadien), Poly(isobutylen), Ethylene-propylen-Copolymere, Ethylen-propylen-dien- Terpolymere, sulfonierte Ethylen-Propylen-Dien Terpolymere, Poly(chloropren), Poly(2,3-dimethylbutadien), Poly(butadiene-pentadiene), chlorsulfonierte Poly(ethylen), Poly(sulfid)-Elastomere, Blockcopolymere, aufgebaut aus Segmenten amorpher oder (teil)kristalliner Blöcke wie Poly(styrol), Poly(vinyl-toluol), Poly(t-butyl styrol), Polyester und ähnliche und elastomeren Blöcke wie Poly(butadien), Poly(isopren), Ethylene-Propylen-Copolymere, Ethylene-Butylen-Copolymere, Ethylen-Isopren-Copolymere und deren hydrierte Abkömmlinge wie zum Beispiel SEBS, SEPS, SEEPS, und auch hydrierte Ethylen-Isopren-Copolymere mit erhöhtem Anteil an 1, 2-verknüpften Isopren, Polyether und ähnliche, wie zum Beispiel die von Kraton Polymers unter dem Handelsnamen KRATON® vertriebenen Produkte.

Die Dosierung dient dazu dem Mischaggregat Pulver oder Flüssigkeit oder Granulat zu zuführen, entweder in Reinform oder vorgemischt in Masterbatches.
Die Zuführung des oder der Polymeren und gegebenenfalls von weiteren Additiven erfolgt dabei kontinuierlich.
Für das erfindungsgemäße Verfahren sind für die Zuführung der Einzelkomponenten zum Mischaggregat die Dosierungsmethoden gemäß Stand der Technik einsetzbar. Eine umfassende Darstellung von in der Praxis eingesetzten Dosiersystemen wurde 1989 in "Dosieren von Feststoffen (Schüttgütern)" von Fa. Gericke herausgegeben. Ergänzend dazu ist im VDI-Bericht "Kunststoffe im Automobilbau", Band Nr.: 4224 (2000) ein aktueller Beitrag zu den üblicherweise eingesetzten Dosiersystemen enthalten. Auf diese Schriften wird Bezug genommen.

Bei der Dosierung wird unterschieden zwischen der Einstromdosierung und der Mehrstromdosierung. Bei der Einstromdosierung werden die Polymere zusammen mit den Zuschlagsstoffen in den Haupteinlauf des Mischaggregats dosiert. Dazu werden Beschickungstrichter sowie Einlaufhilfen mit horizontalen oder vertikalen Schnecken verwendet. Die Mehrstromdosierung wird auch als fraktionierte Dosierung bzw. Split Feed-Technik bezeichnet. Hier erfolgt die Zugabe verschiedener Bestandteile separat. Ferner wird unterschieden zwischen volumetrischer Dosierung und gravimetrischer Dosierung. Bei der volumetrischen Dosierung sind Schnecken für Granulat, Pulver, Faser und Schnitzel geeignete Bauarten, je nach Rieselverhalten des Schüttgutes ausgerüstet mit sog. Auflockerern. Neben Schnecken werden für die volumetrische Dosierung von Granulat, grobkörnigem Pulver, Fasern oder Flocken auch Vibrationsrinnen oder Banddosierer eingesetzt.

Als gravimetrische Dosiergeräte werden geschwindigkeitsgeregelte und gewichtsgeregelte Dosierbandwaagen, Dosierschneckenwaagen, Differentialdosierwaagen mit Schnecke oder Vibrationsrinne und quasikontinuierliche Schüttwaagen eingesetzt.
Der Ringnutdosierer wird für die volumetrische oder gravimetrische Pulverdosierung von Kleinstmengen (ca. 10 g/h) eingesetzt, da hier Schneckendosierer versagen. Flüssige Bestandteile werden dem Mischaggregat durch i.a. volumetrisch arbeitende Dosierpumpen zugeführt. Werden die Dosierpumpen mittels Differentialwaage geregelt, so ist auch bei der Zugabe von Flüssigkeiten eine gravimetrische Dosierung möglich.
Zusätzlich ist eine puls- oder rampenförmige Zugabe von Zuschlagsstoffen über weitere Dosiereinheiten möglich. Für die pulsförmige Zugabe ist beispielsweise eine Abwurfwaage einsetzbar. Bei den Dosierung wird unterschieden zwischen gravimetrischer und volumetrischer Zugabe.

Die hergestellte Mischung kann über einen gewissen Zeitraum oder eine gewisse Strecke nach dem Mischaggregat einer definierten Umgebung oder Behandlung oder Behandlungsstrecke ausgesetzt werden. Hierbei kann die Mischung einem Klima, einem Temperaturprogramm, einer oder mehreren Flüssigkeiten, Feuchtigkeit, einem oder mehreren Gasen, einem oder mehreren Feststoffen oder Mischungen aus Flüssigkeiten und Gasen und Feststoffen, einer oder mehreren elektromagnetischen Strahlungen ausgesetzt werden. Flüssigkeiten oder Feststoffe können in diesem Zusammenhang alle organischen und anorganischen flüssigen und/oder festen Stoffe und/oder biologische Lebewesen oder Substanzen sein. Eine Behandlung kann auch eine mechanische Belastung sein.

## Patentansprüche

1. Verfahren zur kontinuierlichen Herstellung von Mischungen aus mindestens einem thermoplastischen Polymeren und mindestens einem Zuschlagstoff, wobei mindestens ein thermoplastisches Polymer kontinuierlich einem Mischaggregat zugeführt, aufgeschmolzen und mit einem oder mehreren Zuschlagstoffen gemischt wird, wobei die Zuschlagstoffe in Form eines Konzentrationspulses und/oder einer Folge von Konzentrationspulsen zugeführt werden und wobei die Polymermischung kontinuierlich aus dem Mischaggregat ausgetragen und in eine der weiteren Verarbeitung und Prüfung zugänglichen Form überführt wird.

2. Verfahren nach Anspruch 1, wobei durch Auslegung der Düse des Mischaggregätes ein Konzentrationsgradient quer zur Förderrichtung des Mischaggregates erzeugt wird.

## Claims

1. A process for the continuous preparation of mixtures from at least one thermoplastic polymer and at least one additive, where at least one thermoplastic polymer is fed continuously to a mixing assembly and the same is melted and mixed with one or more additives, the additives being fed in the form of a concentration pulse and/or of a concentration pulse sequence, and the polymer mixture being continuously discharged from the mixing assembly and being converted into a form which can be subjected to further processing and testing.

2. The process as claimed in claim 1, the design of the die of the mixing assembly generating a concentration gradient perpendicular to the conveying direction of the mixing assembly.

## Revendications

1. Procédé pour la préparation en continu de mélanges constitués par au moins un polymère thermoplastique et au moins un additif, dans lequel au moins un polymère thermoplastique est introduit en continu dans un appareil de mélange, fondu et mélangé avec un ou plusieurs additifs, les additifs étant acheminés sous forme d'impulsions de concentration et/ou d'une suite d'impulsions de concentration et le mélange de polymères étant évacué en continu de l'appareil de mélange et transformé en une forme accessible à la transformation ultérieure et au test ultérieur.

2. Procédé selon la revendication 1, un gradient de concentration transversal au sens de transport de l'appareil de mélange étant produit par la conception du gicleur de l'appareil du mélange.
